# EUROPÄISCHE PATENTSCHRIFT

(11) **EP 3 339 091 B1**
(45) Veröffentlichungstag und Bekanntmachung des Hinweises auf die Patenterteilung: **31.03.2021**
(21) Anmeldenummer: 17200761.9
(22) Anmeldetag: 09.11.2017
(51) Int. Cl.: B60N 2/68, B60N 2/02, B60R 22/20, B60N 2/856, B60N 2/874, B60R 22/26

(54) **FAHRZEUGSITZ MIT EINEM SICHERHEITSGURTSYSTEM**
VEHICLE SEAT WITH A SAFETY BELT SYSTEM
SIÈGE DE VÉHICULE DOTÉ D'UN SYSTÈME DE CEINTURE DE SÉCURITÉ

(30) Priorität: 20.12.2016 DE 102016124934
(43) Veröffentlichungstag der Anmeldung: 27.06.2018
(73) Patentinhaber: AGUTI PRODUKTENTWICKLUNG & DESIGN GMBH, 88085 Langenargen (DE)
(72) Erfinder: Rogg, Christian, 88142 Wasserburg (DE)
(74) Vertreter: Otten, Roth, Dobler & Partner mbB Patentanwälte

(56) Entgegenhaltungen:
- DE-A1- 2 944 507
- DE-A1- 4 316 930
- US-A- 5 599 070

## Beschreibung

### Stand der Technik

Ein Fahrzeugsitz für ein Fahrzeug ist bereits bekannt.

Ein bekannter Fahrzeugsitz umfasst ein 3-Punkt-Sicherheitsgurtsystem, wobei ein Retraktor des Sicherheitsgurtsystems positionsfest überhalb einer Höhe eines Schulterbereichs eines Nutzers des Fahrzeugsitzes positionsfest an einem Fahrzeugrahmen des Fahrzeugs angeordnet ist. Ein solcher Fahrzeugsitz ist z.B. im Wohnraum eines Wohnmobils angeordnet. Im Fall einer Nutzung des Wohnraums im geparkten Zustand des Wohnmobils ist das Sicherheitsgurtsystem nachteilig sichtbar vorhanden.

US5599070 offenbart einen Fahrzeugsitz mit einem Sicherheitsgurtsystem, wobei das Sicherheitsgurtsystem ein Sicherheitsgurtsystem-Element umfasst, wobei in einem Bereich einer Kopfstütze des Fahrzeugsitzes das Sicherheitsgurtsystem-Element am Fahrzeugsitz verschwenkbar ist.

### Aufgabe und Vorteile der Erfindung

Der Erfindung liegt die Aufgabe zugrunde, einen alternativen Fahrzeugsitz mit einem Sicherheitsgurtsystem bereitzustellen. Insbesondere einen Fahrzeugsitz bereitzustellen, bei welchem das Sicherheitsgurtsystem für einen Nutzer vorteilhaft ausgebildet ist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einem Fahrzeugsitz mit einem Sicherheitsgurtsystem aus.

Das Fahrzeug ist vorteilhafterweise als ein Automobil, z.B. als ein Wohnmobil, als ein Reisemobil und/oder als ein Caravan ausgebildet.

Der Fahrzeugsitz kann als ein Fahrer- oder Beifahrersitz vorhanden sein. Beispielsweise ist der Fahrzeugsitz in einem hinteren oder einem vorderen Bereich des Fahrzeugs anordenbar. Vorteilhafterweise ist der Fahrzeugsitz dazu ausgestaltet in einem hinteren Wohnbereich des Fahrzeugs angeordnet zu werden. Der Fahrzeugsitz kann beispielsweise als ein Einzelsitz oder als eine Fahrzeugsitzbank mit zwei oder mehr Sitzen ausgestaltet sein, sodass z.B. mindestens zwei Personen auf dem Fahrzeugsitz nebeneinander sitzen können.

Der wesentliche Aspekt der Erfindung ist darin zu sehen, dass das Sicherheitsgurtsystem ein Sicherheitsgurtsystem-Element umfasst, wobei in einem Bereich einer Kopf- und/oder Nackenstütze des Fahrzeugsitzes das Sicherheitsgurtsystem-Element am Fahrzeugsitz verschwenkbar angeordnet ist, wobei das Sicherheitsgurtsystem-Element am Fahrzeugsitz in einer Nutzposition und/oder in einer Stauposition fixierbar und/oder arretierbar ist.

Hierdurch ist das Sicherheitsgurtsystem-Element für einen Nutzer vorteilhaft positionierbar.

Bevorzugterweise ist das Sicherheitsgurtsystem-Element derart an den Fahrzeugsitz anordenbar, dass das Sicherheitsgurtsystem-Element nicht um sich selbst drehbar ist, sondern um eine Schwenkachse schwenkbar ist, welche das Sicherheitsgurtsystem-Element insbesondere nicht schneidet.

Das Sicherheitsgurtsystem-Element ist vorteilhafterweise an einem Gurtgestell des Fahrzeugsitzes befestigt. Hierdurch werden Kräfte, welche auf das Sicherheitsgurtsystem-Element wirken, z.B. in einem Crash-Fall, beispielsweise über das Gurtgestell auf einen Fahrzeugrahmen des Fahrzeugs abgeleitet.

Auch ist es von Vorteil, dass eine Kopfstütze des Fahrzeugsitzes bewegbar am Fahrzeugsitz vorhanden ist, wobei das Sicherheitsgurtsystem-Element bei einer Bewegung der Kopfstütze mitbewegt, insbesondere mitverschwenkt ist. Durch ein gemeinsames Verschwenken der Kopfstütze und des Sicherheitsgurtsystem-Elements, insbesondere in eine gleiche Dreh- bzw. Schwenkrichtung, ist ein Bewegen der Kopfstütze und des Sicherheitsgurtsystem-Elements erleichtert. Hierdurch ist einen Kopfstütze zusammen mit dem Sicherheitsgurtsystem-Element von einer Nutzposition in eine Stauposition am Fahrzeugsitz oder umgekehrt verschwenkbar.

Vorteilhafterweise verschwenken die Kopfstütze und das Sicherheitsgurtsystem-Element in die gleiche Schwenkrichtung. Denkbar ist, dass ein Radius einer Schwenkbewegung der Kopfstütze gleich oder unterschiedlich ist zu einem Radius einer Schwenkbewegung des Sicherheitsgurtsystem-Elements. Denkbar ist, dass die Kopfstütze und das Sicherheitsgurtsystem-Element, z.B. in einer Art Scherenbewegung, gemeinsam, insbesondere zeitgleich, in zueinander entgegengesetzten Schwenkbewegungen verschwenken.

Vorteilhafterweise umfasst das Sicherheitsgurtsystem-Element und/oder die Kopfstütze ein Rotationslager, mittels welchem das Sicherheitsgurtsystem-Element und/oder die Kopfstütze drehbar, insbesondere verschwenkbar am Fahrzeugsitz angeordnet ist.

Vorteilhafterweise ist das Sicherheitsgurtsystem-Element und/oder die Kopfstütze um eine Schwenkachse des Rotationslagers, insbesondere um eine Drehachse, schwenkbar und/oder drehbar am Fahrzeugsitz vorhanden, wobei die Schwenk- und/oder Drehachse parallel zu einer Bodenfläche eines Fahrzeugs, an welcher der Fahrzeugsitz befestigbar ist, und parallel zu einer Sitzrichtung eines Nutzers des Fahrzeugsitzes vorhanden ist. Z.B. ist die Schwenk- und/oder Drehachse senkrecht zu einer Anlehnfläche der Rückenlehne vorhanden.

Auch ist es vorstellbar, dass die Kopfstütze und das Sicherheitsgurtsystem-Element um eine gleiche, gemeinsame Schwenkachse verschwenken und somit ein gemeinsames Rotationslager am Fahrzeugsitz aufweisen. Denkbar ist aber auch, dass sowohl die Kopfstütze, als auch das Sicherheitsgurtsystem-Element jeweils ein eigenes, z.B. separates Rotationslager aufweisen. Wobei die Rotationslager getrennt voneinander am Fahrzeugsitz angeordnet sind, sodass eine Schwenkachse der Kopfstütze versetzt zu einer Schwenkachse des Sicherheitsgurtsystem-Elements am Fahrzeugsitz vorhanden ist. Die Schwenkachse der Rotationslager der Kopfstütze und des Sicherheitsgurtsystem-Elements sind vorteilhafterweise parallel zueinander ausgerichtet vorhanden.

Weiter wird vorgeschlagen, dass das Sicherheitsgurtsystem-Element an der Kopfstütze angeordnet ist. Hierdurch sind das Sicherheitsgurtsystem-Element und die Kopfstütze vergleichsweise stabil am Fahrzeugsitz vorhanden und insbesondere gemeinsam verschwenkbar.

Vorteilhafterweise umfasst die Kopfstütze ein, insbesondere in der Nutzposition, am Fahrzeugsitz vertikal verlaufendes Halteelement. Mit dem Haltelement ist die Kopfstütze beispielsweise am Gurtgestell des Fahrzeugsitzes montiert, z.B. über das Rotationslager der Kopfstütze. Vorstellbar ist, dass das Sicherheitsgurtsystem-Element am Halteelement der Kopfstütze montiert ist. Das Halteelement der Kopfstütze ist vorteilhafterweise vergleichsweise stabil vorhanden, sodass auf die Kopfstütze und/oder das Sicherheitsgurtsystem-Element einwirkende Kräfte, z.B. im Crash-Fall des Fahrzeugs absorbiert und auf das Gurtgestell des Fahrzeugsitzes übertragbar sind. Denkbar ist, dass das Halteelement als ein Rohr, Stab und/oder als Metall- oder Blechstreifen, z.B. als Vierkantrohr, insbesondere aus Metall vorhanden ist.

Auch erweist es sich von Vorteil, dass das Sicherheitsgurtsystem-Element als ein Retraktor ausgebildet ist. Hierdurch ist ein 3-Punkt-Gurt-Sicherheitssystem am Fahrzeugsitz realisiert.

Vorteilhafterweise umfasst das Sicherheitsgurtsystem neben dem Retraktor einen Sicherheitsgurt. Der Sicherheitsgurt ist vorteilhafterweise mit einem ersten Ende am Retraktor festgelegt. Der Retraktor oder auch Aufrollmechanismus blockiert bei einer vergleichsweise starken oder schnellen Bewegung, z.B. einer Entrollbewegung des am Retraktor angeordneten Sicherheitsgurts, die Bewegung des Sicherheitsgurts automatisch.

Vorteilhafterweise ist das Sicherheitsgurtsystem-Element, z.B. zusammen mit der Kopfstütze, bzw. die Kopfstütze zusammen mit dem Sicherheitsgurtsystem-Element, von einer Nutzposition am Fahrzeugsitz in eine Stauposition am Fahrzeugsitz oder umgekehrt verschwenkbar.

Bevorzugterweise sind Arretierungsmittel vorhanden, welche derart ausgebildet sind, dass das Sicherheitsgurtsystem-Element in der Stau- und/oder der Nutzposition, insbesondere automatisch, beispielsweise lösbar arretiert. Beispielsweise umfasst das Rotationslager der Kopfstütze und/oder das Rotationslager des Sicherheitsgurtsystem-Elements ein Arretierungsmittel.

Außerdem erweist es sich als vorteilhaft, dass das Sicherheitsgurtsystem einen Sicherheitsgurt umfasst, wobei am Sicherheitsgurt zwei Sicherheitsschlosszungen vorhanden sind.

Bevorzugterweise ist der Sicherheitsgurt im ungenutzten Zustand insbesondere aufgerollt am Retraktor befestigt. Hierdurch ist der Sicherheitsgurt und die angeordneten Sicherheitsschlosszungen zusammen mit dem Sicherheitsgurtsystem-Element verschwenkbar vorhanden.

Überdies vorteilhaft ist, dass eine erste Sicherheitsschlosszunge positionsfest am Sicherheitsgurt vorhanden ist und eine zweite Sicherheitsschlosszunge entlang des Sicherheitsgurts beweglich am Sicherheitsgurt angeordnet ist.

Bevorzugterweise ist der Sicherheitsgurt mit einem zweiten Ende, welches gegenüberliegend zum ersten Ende vorhanden ist, an der ersten Sicherheitsschlosszunge fixiert. Vorteilhafterweise umfasst das Sicherheitsgurtsystem zwei Gurtschlösser bzw. Sicherheitsschlosszungen, sodass das Sicherheitsgurtsystem in Form eines Drei-Punkt-Gurt-Systems ausgebildet ist. Dadurch sind der Sicherheitsgurt und die Sicherheitsschlosszungen in ungenutzten Zustand vorteilhafterweise für einen Nutzer unsichtbar verstaubar bzw. verschwenkbar vorhanden.

Eine vorteilhafte Modifikation der Erfindung ist, dass der Fahrzeugsitz eine Rückenlehne aufweist und an, insbesondere in der Rückenlehne ein Stauraum ausgebildet ist, wobei das Sicherheitsgurtsystem-Element und/oder die Kopfstütze in eine Stauposition des Stauraums verschwenkbar am Fahrzeugsitz vorhanden ist.

Vorteilhafterweise ist das Sicherheitsgurtsystem-Element und/oder die Kopfstütze in die Rückenlehne, insbesondere in den Stauraum komplett versenkbar vorhanden. Hierdurch ist das Sicherheitsgurtsystem-Element und/oder die Kopfstütze vergleichsweise einfach, bequem und/oder insbesondere unsichtbar am Fahrzeugsitz, insbesondere an der Rückenlehne des Fahrzeugsitzes, beispielsweise im Stauraum verstaubar.

Vorteilhafterweise ist der Retraktor oder Aufrollmechanismus, insbesondere das Rotationslager in einem Stauraum des Fahrzeugsitzes anordenbar und z.B. für einen Nutzer unsichtbar vorhanden.

Weiter wird vorgeschlagen, dass die Kopfstütze derart ausgebildet ist, dass die Kopfstütze in der Stauposition den Stauraum der Rückenlehne des Fahrzeugsitzes verschließt. Hierdurch ist der Fahrzeugsitz derart vorhanden, dass der Fahrzeugsitz in einer Wohnsituation für einen Nutzer vorteilhaft ästhetisch vorhanden ist.

Beispielsweise bildet eine seitliche Seitenfläche der Kopfstütze in der Stauposition eine Oberseite der Rückenlehne. Denkbar ist auch, dass eine untere Seitenfläche, eine Unterseite der Kopfstütze in der Stauposition eine Oberseite der Rückenlehne bildet.

Bevorzugterweise ist die Kopfstütze in der Stauposition für einen Nutzer unsichtbar, versteckt in der Rückenlehne versenkt. Beispielsweise ist an der Kopfstütze das Sicherheitsgurtsystem-Element des Sicherheitsgurtsystems in einer Weise vorhanden, dass das Sicherheitsgurtsystem-Element für einen Nutzer in der Stauposition der Kopfstütze unsichtbar ist. Beispielsweise ist die Kopfstütze und/oder das Sicherheitsgurtsystem-Element in der Stauposition vollständig im Stauraum vorhanden.

Von Vorteil ist auch, dass der Fahrzeugsitz zwei Sicherheitsgurtsysteme und/oder zwei Kopfstützen aufweist, wobei jeweils eine Kopfstütze ein Sicherheitsgurtsystem-Element umfasst.

Beispielsweise ist eine Kopfstütze in der Mitte geteilt, sodass die Kopfstütze eine rechte und eine linke Kopfstütze, z.B. in Form einer Kopfstützenhälfte umfasst, wobei eine Kopfstützenhälfte bspw. eine Form, insbesondere eine Funktion einer ganzen Kopfstütze aufweist. Vorteilhafterweise ist jede Kopfstütze bzw. jede Kopfstützenhälfte dabei jeweils einem Sitzplatz des Fahrzeugsitzes zugeordnet, an welchem die Kopfstütze montiert ist. Vorteilhafterweise ist die Kopfstütze hälftig geteilt, insbesondere zweigeteilt vorhanden. Insbesondere ist die Kopfstütze in einer vertikalen Richtung geteilt vorhanden. Vorteilhafterweise ist die Kopfstütze derart zweigeteilt vorhanden, dass die beiden Kopfstützen zueinander spiegelsymmetrisch vorhanden sind. Hierdurch ist es vorstellbar, dass jeweils eine Kopfstützenhälfte einer Person als Kopf- oder Nackenstütze dient, insbesondere dann, wenn die Kopfstütze an einer Bank, insbesondere Fahrzeugbank für zwei oder mehr Personen angeordnet ist. Vorteilhafterweise sind die beiden Kopfstützen in entgegengesetzten Richtungen von einer Nutzposition in eine Stauposition verschwenkbar. Bevorzugterweise ist in diesem Fall an jeder Kopfstütze, bzw. an jeder Kopfstützenhälfte ein Sicherheitsgurtsystem-Element angeordnet. Weist der Fahrzeugsitz, z.B. als Fahrzeugsitzbank, bspw. zwei Sitzplätze auf, so sind vorteilhafterweise am Fahrzeugsitz zwei Sicherheitsgurtsysteme vorhanden, insbesondere zwei Sicherheitsgurtsystem-Elemente angeordnet.

Ebenfalls vorteilhaft ist, dass der Fahrzeugsitz als eine Fahrzeugsitzbank, ausgebildet ist, wobei der Fahrzeugsitz ein, zwei oder mehr Kopfstützen umfasst, wobei der Stauraum der Rückenlehne z.B. in Stauraumabschnitte unterteilt ist, wobei ein Stauraumabschnitt zur Aufnahme eines Sicherheitssystem-Elements und/oder einer Kopfstütze ausgebildet ist.

Beispielsweise umfasst die Fahrzeugsitzbank zwei Kopfstützen und zwei Sicherheitssystem-Elemente. Vorstellbar ist auch, dass die Rückenlehne zweigeteilt vorhanden ist. Denkbar ist weiter, dass ein erster Stauraumabschnitt zur Aufnahme einer ersten Kopfstütze, z.B. einer rechte Kopfstützenhälfte, und eines ersten Sicherheitsgurtsystem-Elements und ein zweiter Stauraumabschnitt zur Aufnahme einer zweiten Kopfstütze, z.B. der linken Kopfstützenhälfte, und eines zweiten Sicherheitsgurtsystem-Elements ausgebildet ist.

Ist der Fahrzeugsitz als Fahrzeugsitzbank ausgebildet, so kann der Fahrzeugsitz entsprechend einer Anzahl von Sitzplätzen der Fahrzeugsitzbank eine entsprechende Vielzahl von Sicherheitsgurtsystemen, z.B. zwei, drei oder mehr Sicherheitsgurtsysteme, aufweisen.

### Beschreibung der Ausführungsbeispiele

Mehrere Ausführungsbeispiele werden anhand der nachstehenden schematischen Zeichnungen unter Angabe weiterer Einzelheiten und Vorteile näher erläutert.

Es zeigen:
- Figuren 1 bis 3: Einen erfindungsgemäßen Fahrzeugsitz in einer perspektivischen Ansicht von schräg vorne oben, mit einer Kopfstütze in unterschiedlichen Nutzzuständen,
- Figuren 4 und 5: eine Ansicht von schräg vorne auf eine transparent dargestellte Rückenlehne des Fahrzeugsitz nach den Figuren 1 und 2 und
- Figur 6: eine Ansicht von schräg vorne unten auf eine transparent dargestellte Rückenlehne des Fahrzeugsitz nach Figur 2 bzw. 5, in welcher eine Bewegung einer Kopfstütze mit angeordneten Sicherheitsgurtsystem-Element angedeutet ist.

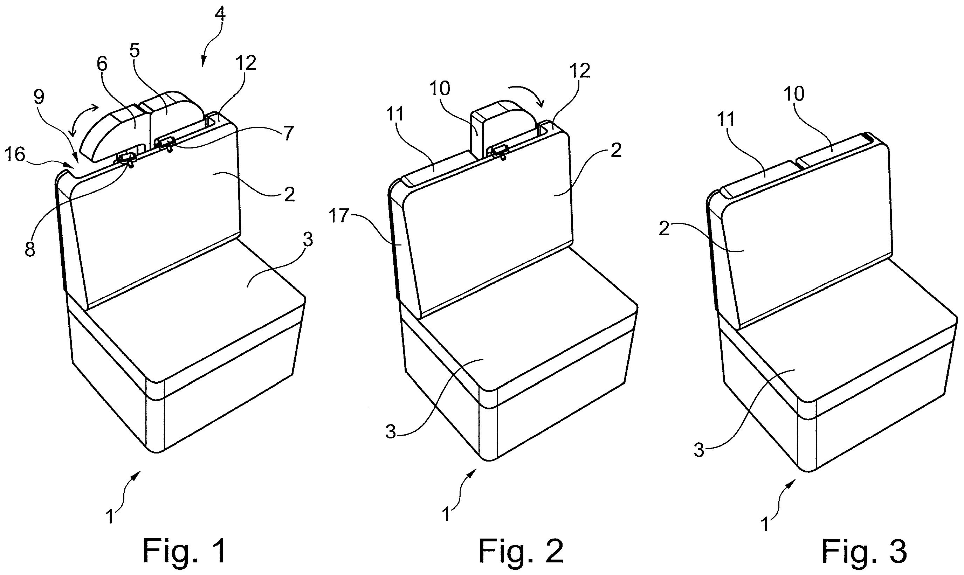

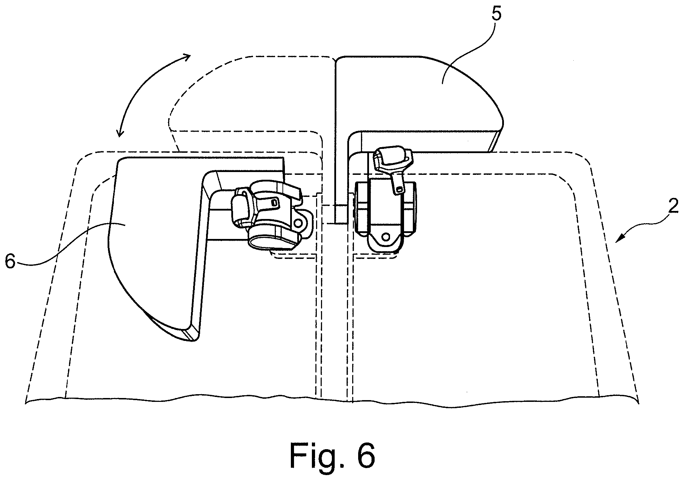

Ein erfindungsgemäßer Fahrzeugsitz 1 umfasst eine Rückenlehne 2 und eine Sitzfläche 3. An einem, der Sitzfläche 3 entgegen gesetzten, oberen Ende 4 ist an der Rückenlehne 2 eine Kopfstütze 5 vorhanden. Ist der Fahrzeugsitz 1 z.B. als Fahrzeugsitzbank ausgebildet, wie in den Figuren 1 bis 6 dargestellt, so sind an der Rückenlehne mehrere Kopfstützen angeordnet, z.B. zwei Kopfstützen 5, 6. Die Kopfstützen 5, 6 können dergestalt ausgebildet sein und derart am Fahrzeugsitz 1 bzw. der Rückenlehne 2 vorhanden sein, dass die Kopfstützen 5, 6 in ihrer Gesamterscheinung einer einzigen Kopfstütze entsprechen und/oder aber eine Funktion von zwei Kopfstützen aufweisen (Figur 1). An jeder der Kopfstützen 5, 6 ist vorteilhafterweise jeweils ein Retraktor 7, 8 eines Sicherheitsgurtsystems angeordnet. Der Fahrzeugsitz 1 umfasst somit z.B. zwei Sicherheitsgurtsysteme, wodurch z.B. zwei Personen auf dem Fahrzeugsitz 1 sitzen können und jede Person von einem Sicherheitsgurtsystem geschützt werden kann.

Die Rückenlehne 2 des Fahrzeugsitz 1 umfasst weiterhin einen Stauraum 9, in welchen die beiden Kopfstützen 5, 6 zusammen mit den Retraktoren 7, 8 aus einer Nutzposition (Figur 1) in eine Stauposition (Figur 3) hinein verschwenkbar vorhanden sind (Figuren 1 bis 3). In der Stauposition der Kopfstützen 5, 6 schließt eine Kopfstütze 5, 6, insbesondere beide Kopfstützen 5, 6 bspw. mit jeweils einer Seitenfläche 10, 11 eine obere Seitenfläche 12 der Rückenlehne 2 insbesondere bündig ab. In der Stauposition verschließt eine Kopfstütze 5, 6, insbesondere beide Kopfstützen 5, 6 vorteilhafterweise den Stauraum 9. Vorteilhafterweise ist der Retraktor 7, 8 in der Nutzposition in einem Bereich des Stauraums 9 an der Kopfstütze 5, 6 angeordnet. Hierdurch ist der Retraktor 7, 8 im Nutzzustand für einen Nutzer vorteilhafterweise nicht sichtbar vorhanden. Bevorzugterweise ist der Retraktor 7, 8 derart an der Kopfstütze 5, 6 montiert, dass ein Nutzer in der Nutzposition des Retraktors 7, 8 einen Sicherheitsgurt 18 bzw. eine Sicherheitschlosszunge 19, welche am Retraktor 7, 8 vorhanden ist, greifen kann. In der Nutzposition einer Kopfstütze 5, 6 ist Sicherheitsgurt 18 bzw. die Sicherheitschlosszunge 19 somit für einen Nutzer des Fahrzeugsitzes 1 vorteilhafterweise sichtbar und verwendbar vorhanden. In der Stauposition ist der Retraktor 7, 8 und insbesondere der Sicherheitsgurt 18 bzw. die Sicherheitschlosszunge 19 bevorzugterweise für einen Nutzer unsichtbar im Stauraum 9 der Rückenlehne 2 positioniert.

Eine Öffnung 16 des Stauraums 9, durch welche die Kopfstütze 5, 6 aus der Nutzposition am Fahrzeugsitz 1 in die Stauposition im Stauraum 9 am Fahrzeugsitz 1 schwenkbar ist, ist vorteilhafterweise an der oberen Seitenfläche 12 der Rückenlehne 2 ausgebildet. Die obere Seitenfläche 12 verläuft vorteilhafterweise horizontal und vergleichsweise parallel zur Sitzfläche 3 des Fahrzeugsitzes 1. Vorstellbar ist auch, dass die Öffnung des Stauraums 9 an einer seitlichen Schmalseite 17 der Rückenlehne 2 ausgebildet ist.

Der Stauraum 9 an der Rückenlehne 2 ist z.B. als Aussparung ausgebildet, sodass der Stauraum 9 einen Bereich der Rückenlehne 2 ausschneidet. In diesem Fall begrenzt die Rückenlehne 2 den Stauraum z.B. an zumindest 3 Seiten, insbesondere an 4 Seiten. Hierdurch ist die Kopfstütze 5, 6 in der Stauposition derart am Fahrzeugsitz 1 vorhanden, dass die Kopfstütze z.B. für einen Nutzer sichtbar ist. Denkbar ist allerdings auch, dass der Stauraum als eine Vertiefung an der Rückenlehne vorhanden ist, und die Rückenlehne den Stauraum an insbesondere zumindest 5 Seiten begrenzt. Der Stauraum 9 ist vorteilhafterweise kastenartig oder scheibenartig, insbesondere scheibensegmentartig vorhanden.

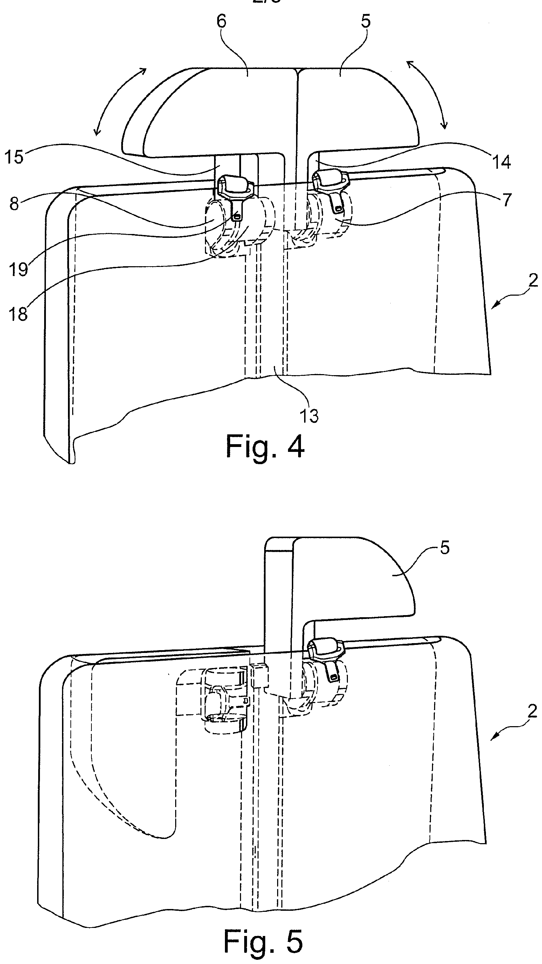

In den Figuren 4 bis 6 ist die Rückenlehne 2 des Fahrzeugsitz 1 transparent dargestellt. Gezeigt ist, dass die Kopfstütze 5, 6 und z.B. der Retraktor 7, 8 an einem Gestell 13 des Fahrzeugsitz 1 befestigt ist. Das Gestell 13 ist vorteilhafterweise als ein vertikal verlaufendes Vierkantrohr vorhanden. Der Retraktor 7, 8 ist bspw. an einer vertikal verlaufenden Strebe 14, 15 der Kopfstütze 5, 6 montiert. Die Kopfstütze 5, 6 ist mit der vertikal verlaufenden Strebe 14, 15 z.B. am Gestell 13 schwenkbar befestigt. Vorteilhafterweise ist hierzu ein Rotationslager vorhanden (nicht dargestellt).

Weiter ist in den Figuren 4 bis 6 eine Schwenkbewegung der Kopfstütze 6 aus einer Nutzposition (Figur 4) in eine Stauposition im Stauraum 9 der Rückenlehne 2 dargestellt. Die Kopfstütze 5, 6 bzw. der Retraktor 7, 8 sind vorteilhafterweise derart an der Rückenlehne 2 angeordnet, dass sie von einer Nutzposition in eine Stauposition, oder umgekehrt, um eine Drehachse verschwenken, welche bevorzugterweise horizontal ausgerichtet ist, z.B. parallel zur Sitzfläche 3 bzw. parallel zu einem Fahrzeugboden, an welchem der Fahrzeugsitz 1 anordenbar ist, und z.B. parallel zu einer Sitzrichtung eines Nutzers des Fahrzeugsitz 1 verläuft.

### Bezugszeichenliste

- 1: Fahrzeugsitz
- 2: Rückenlehne
- 3: Sitzfläche
- 4: Ende
- 5, 6: Kopfstütze
- 7, 8: Retraktor
- 9: Stauraum
- 10, 11: Seitenfläche
- 12: Seitenfläche
- 13: Gestell
- 14, 15: Strebe
- 16: Öffnung
- 17: Schmalseite
- 18: Sicherheitsgurt
- 19: Sicherheitsschlosszunge

## Patentansprüche

1. Fahrzeugsitz (1) mit einem Sicherheitsgurtsystem,
wobei das Sicherheitsgurtsystem ein Sicherheitsgurtsystem-Element umfasst, wobei in einem Bereich einer Kopfstütze (5, 6) des Fahrzeugsitzes (1) das Sicherheitsgurtsystem-Element am Fahrzeugsitz (1) verschwenkbar angeordnet ist,
**dadurch gekennzeichnet, dass** das Sicherheitsgurtsystem-Element von einer Nutzposition am Fahrzeugsitz in eine Stauposition am Fahrzeugsitz oder umgekehrt verschwenkbar ist, wobei das Sicherheitsgurtsystem-Element (7, 8) am Fahrzeugsitz (1) in der Nutzposition und/oder in der Stauposition fixierbar und/oder arretierbar ist.

2. Fahrzeugsitz (1) mit einem Sicherheitsgurtsystem nach dem vorangegangenen Anspruch 1, **dadurch gekennzeichnet, dass** Arretierungsmittel vorhanden sind, wobei die Arretierungsmittel derart ausgebildet sind, dass das Sicherheitsgurtsystem-Element (7, 8) in der Nutzposition und/oder in der Stauposition lösbar fixiert und/oder arretiert ist.

3. Fahrzeugsitz (1) mit einem Sicherheitsgurtsystem nach einem der vorangegangenen Ansprüche, **dadurch gekennzeichnet, dass** eine Kopfstütze (5, 6) des Fahrzeugsitzes (1) bewegbar am Fahrzeugsitz (1) vorhanden ist, wobei das Sicherheitsgurtsystem-Element bei einer Bewegung der Kopfstütze (5, 6) mitbewegt, insbesondere mitverschwenkt ist.

4. Fahrzeugsitz (1) mit einem Sicherheitsgurtsystem nach einem der vorangegangenen Ansprüche, **dadurch gekennzeichnet, dass** das Sicherheitsgurtsystem-Element an der Kopfstütze (5, 6) angeordnet ist.

5. Fahrzeugsitz (1) mit einem Sicherheitsgurtsystem nach einem der vorangegangenen Ansprüche, **dadurch gekennzeichnet, dass** das Sicherheitsgurtsystem-Element als ein Retraktor (7, 8) ausgebildet ist.

6. Fahrzeugsitz (1) mit einem Sicherheitsgurtsystem nach einem der vorangegangenen Ansprüche, **dadurch gekennzeichnet, dass** das Sicherheitsgurtsystem einen Sicherheitsgurt umfasst, wobei am Sicherheitsgurt zwei Sicherheitsschlosszungen vorhanden sind.

7. Fahrzeugsitz (1) mit einem Sicherheitsgurtsystem nach dem vorangegangenen Anspruch 6, **dadurch gekennzeichnet, dass** eine erste Sicherheitsschlosszunge positionsfest am Sicherheitsgurt vorhanden ist und eine zweite Sicherheitsschlosszunge entlang des Sicherheitsgurts beweglich am Sicherheitsgurt angeordnet ist.

8. Fahrzeugsitz (1) mit einem Sicherheitsgurtsystem nach einem der vorangegangenen Ansprüche, **dadurch gekennzeichnet, dass** der Fahrzeugsitz (1) eine Rückenlehne (3) aufweist und an, insbesondere in der Rückenlehne (3) ein Stauraum (9) ausgebildet ist, wobei das Sicherheitsgurtsystem-Element (7, 8) und/oder die Kopfstütze (5, 6) in eine Stauposition des Stauraums (9) verschwenkbar am Fahrzeugsitz (1) vorhanden ist.

9. Fahrzeugsitz (1) mit einem Sicherheitsgurtsystem nach dem vorangegangenen Anspruch 8, **dadurch gekennzeichnet, dass** die Kopfstütze (5, 6) derart ausgebildet ist, dass die Kopfstütze (5, 6) in der Stauposition den Stauraum (9) der Rückenlehne (3) des Sitzes verschließt.

10. Fahrzeugsitz (1) mit einem Sicherheitsgurtsystem nach einem der vorangegangenen Ansprüche, **dadurch gekennzeichnet, dass** der Fahrzeugsitz (1) zwei Sicherheitsgurtsysteme und/oder zwei Kopfstützen (5, 6) aufweist, wobei eine Kopfstütze (5, 6) ein Sicherheitsgurtsystem-Element (7, 8) umfasst.

11. Fahrzeugsitz (1) mit einem Sicherheitsgurtsystem nach einem der vorangegangenen Ansprüche, **dadurch gekennzeichnet, dass** der Fahrzeugsitz (1) als eine Fahrzeugsitzbank, ausgebildet ist, wobei der Fahrzeugsitz (1) ein, zwei oder mehr Kopfstützen (5, 6) umfasst, wobei der Stauraum (9) der Rückenlehne (3) in Stauraumabschnitte unterteilt ist, wobei ein Stauraumabschnitt zur Aufnahme eines Sicherheitssystem-Elements (7, 8) und/oder einer Kopfstütze (5, 6) ausgebildet ist.

12. Fahrzeug mit einem Fahrzeugsitz (1) nach einem der vorangegangenen Ansprüche.

## Claims

1. Vehicle seat (1) with a seat belt system, wherein the seat belt system comprises a seat belt system element, wherein, in a region of a headrest (5, 6) of the vehicle seat (1), the seat belt system element is arranged pivotably on the vehicle seat (1), **characterized in that** the seat belt system element is pivotable from a use position on the vehicle seat into a stowage position on the vehicle seat, or vice versa, wherein the seat belt system element (7, 8) is fixable and/or lockable on the vehicle seat (1) in the use position and/or in the stowage position.

2. Vehicle seat (1) with a seat belt system according to the preceding Claim 1, **characterized in that** there are locking means, wherein the locking means are designed in such a manner that the seat belt system element (7, 8) is releasably fixed and/or locked in the use position and/or in the stowage position.

3. Vehicle seat (1) with a seat belt system according to either of the preceding claims, **characterized in that** a headrest (5, 6) of the vehicle seat (1) is present movably on the vehicle seat (1), wherein the seat belt system element moves, in particular pivots, at the same time as the headrest (5, 6) moves.

4. Vehicle seat (1) with a seat belt system according to one of the preceding claims, **characterized in that** the seat belt system element is arranged on the headrest (5, 6) .

5. Vehicle seat (1) with a seat belt system according to one of the preceding claims, **characterized in that** the seat belt system element is designed as a retractor (7, 8) .

6. Vehicle seat (1) with a seat belt system according to one of the preceding claims, **characterized in that** the seat belt system comprises a seat belt, wherein there are two seat belt tongues on the seat belt.

7. Vehicle seat (1) with a seat belt system according to the preceding Claim 6, **characterized in that** there is a first seat belt tongue in a fixed position on the seat belt, and a second seat belt tongue is arranged on the seat belt so as to be movable along the seat belt.

8. Vehicle seat (1) with a seat belt system according to one of the preceding claims, **characterized in that** the vehicle seat (1) has a backrest (3), and a stowage space (9) is formed on, in particular in, the backrest (3), wherein the seat belt system element (7, 8) and/or the headrest (5, 6) are/is present on the vehicle seat (1) in a manner so as to be pivotable into a stowage position of the stowage space (9).

9. Vehicle seat (1) with a seat belt system according to the preceding Claim 8, **characterized in that** the headrest (5, 6) is designed in such a manner that the headrest (5, 6) in the stowage position closes the stowage space (9) of the backrest (3) of the seat.

10. Vehicle seat (1) with a seat belt system according to one of the preceding claims, **characterized in that** the vehicle seat (1) has two seat belt systems and/or two headrests (5, 6), wherein a headrest (5, 6) comprises a seat belt system element (7, 8).

11. Vehicle seat (1) with a seat belt system according to one of the preceding claims, **characterized in that** the vehicle seat (1) is in the form of a vehicle seat bench, wherein the vehicle seat (1) comprises one, two or more headrests (5, 6), wherein the stowage space (9) of the backrest (3) is divided into stowage space sections, wherein a stowage space section is designed for receiving a seat belt system element (7, 8) and/or a headrest (5, 6) .

12. Vehicle with a vehicle seat (1) according to one of the preceding claims.

## Revendications

1. Siège (1) pour véhicule doté d'un système de ceinture de sécurité, le système de ceinture de sécurité comprenant un élément de système de ceinture de sécurité, l'élément de système de ceinture de sécurité étant disposé à pivotement sur le siège (1) pour véhicule au niveau de l'appuie-tête (5, 6) du siège (1) pour véhicule, **caractérisé en ce que** l'élément de système de ceinture de sécurité peut pivoter d'une position d'utilisation sur le siège pour véhicule à une position de rangement sur le siège pour véhicule ou inversement, l'élément (7, 8) de système de ceinture de sécurité pouvant être fixé et/ou verrouillé dans la position d'utilisation et/ou dans la position de rangement sur le siège (1) pour véhicule.

2. Siège (1) pour véhicule doté d'un système de ceinture de sécurité selon la revendication 1 qui précède, **caractérisé en ce que** des moyens de verrouillage sont prévus, les moyens de verrouillage étant configurés de telle sorte que l'élément (7, 8) de système de ceinture de sécurité soit fixé et/ou verrouillé de manière libérable dans la position d'utilisation et/ou dans la position de rangement.

3. Siège (1) pour véhicule doté d'un système de ceinture de sécurité selon l'une des revendications précédentes, **caractérisé en ce que** l'appuie-tête (5, 6) du siège (1) pour véhicule est prévu pour être mobile sur le siège (1) pour véhicule, l'élément de système de ceinture de sécurité étant entraîné dans le déplacement et en particulier dans l'inclinaison de l'appuie-tête (5, 6) .

4. Siège (1) pour véhicule doté d'un système de ceinture de sécurité selon l'une des revendications précédentes, **caractérisé en ce que** l'élément de système de ceinture de sécurité est disposé sur l'appuie-tête (5, 6) .

5. Siège (1) pour véhicule doté d'un système de ceinture de sécurité selon l'une des revendications précédentes, **caractérisé en ce que** l'élément de système de ceinture de sécurité est configuré comme rétracteur élément (7, 8).

6. Siège (1) pour véhicule doté d'un système de ceinture de sécurité selon l'une des revendications précédentes, **caractérisé en ce que** le système de ceinture de sécurité comporte une ceinture de sécurité, deux languettes de verrouillage étant prévues sur la ceinture de sécurité.

7. Siège (1) pour véhicule doté d'un système de ceinture de sécurité selon la revendication 6 qui précède, **caractérisé en ce qu'**une première languette de verrouillage est prévue en position fixe sur la ceinture de sécurité et une deuxième languette de verrouillage est disposée sur la ceinture de sécurité de manière à pouvoir se déplacer le long de la ceinture de sécurité.

8. Siège (1) pour véhicule doté d'un système de ceinture de sécurité selon l'une des revendications précédentes, **caractérisé en ce que** le siège (1) pour véhicule comprend un dossier (3) et **en ce qu'**un espace de rangement (9) est prévu sur et en particulier dans le dossier (3), l'élément (7, 8) de système de ceinture de sécurité et/ou l'appuie-tête (5, 6) étant prévus sur le siège (1) pour véhicule de manière à pouvoir pivoter dans une position de rangement de l'espace de rangement (9).

9. Siège (1) pour véhicule doté d'un système de ceinture de sécurité selon la revendication 8 qui précède, **caractérisé en ce que** l'appuie-tête (5, 6) est configuré de telle sorte qu'en position de rangement, l'appuie-tête (5, 6) ferme l'espace de rangement (9) du dossier (3) du siège.

10. Siège (1) pour véhicule doté d'un système de ceinture de sécurité selon l'une des revendications précédentes, **caractérisé en ce que** le siège (1) pour véhicule présente deux systèmes de ceinture de sécurité et/ou deux appuie-tête (5, 6), un appuie-tête (5, 6) comprenant un élément (7, 8) de système de ceinture de sécurité.

11. Siège (1) pour véhicule doté d'un système de ceinture de sécurité selon l'une des revendications précédentes, **caractérisé en ce que** le siège (1) pour véhicule est configuré comme banquette pour véhicule, le siège (1) pour véhicule comportant un appuie-tête, deux appuie-tête (5, 6) ou plus, l'espace de rangement (9) du dossier (3) étant divisé en sections d'espace de rangement, une section d'espace de rangement étant configurée pour reprendre un élément (7, 8) de système de ceinture de sécurité et/ou un appuie-tête (5, 6).

12. Véhicule doté d'un siège (1) pour véhicule selon l'une des revendications précédentes.
